# EUROPEAN PATENT SPECIFICATION

(11) **EP 2 598 077 B1**
(45) Date of publication and mention of the grant of the patent: **07.11.2018**
(21) Application number: 11733724.6
(22) Date of filing: 09.06.2011
(51) Int. Cl.: A61C 3/03, A61C 1/14, A61B 17/32

(54) **TRANSDUCER ACTIVATED TOOL WITH WATER CONDUIT**
WANDLERAKTIVIERTES WERKZEUG MIT EINER WASSERLEITUNG
OUTIL ACTIVÉ PAR TRANSDUCTEUR MUNI D'UNE CONDUITE D'EAU

(30) Priority: 10.06.2010 US 353385 P
(43) Date of publication of application: 05.06.2013
(73) Proprietor: DENTSPLY SIRONA Inc., York, PA 17401-2991 (US)
(72) Inventor: GUARAGNO, Kenneth, R., Spring Grove PA 17362 (US); BARTO, Matthew, Van, Dallastown PA 17313 (US); SENSABAUGH, Cynthia, F., Seven Valleys PA 17360 (US); MASCOLA, Jennifer, Lynn, Hershey PA 17033 (US)
(74) Representative: Hartz, Nikolai
(86) International application number: PCT/US2011/039733
(87) International publication number: WO 2011/156559

(56) References cited:
- EP-A2- 0 323 598
- WO-A1-94/16640
- WO-A1-97/27819
- WO-A1-03/070121
- DE-A1- 19 947 325
- FR-A1- 2 773 468
- JP-A- 1 212 547
- US-A- 5 531 597
- US-A- 6 164 968
- US-A1- 2004 038 175
- US-A1- 2004 265 776
- US-A1- 2009 239 191

## Description

### TECHNICAL FIELD

Disclosed herein is a transducer activated tool for contacting workpiece surfaces and directing a fluid adjacent to the workpiece. More particularly, the tool described herein relates to an ultrasonically activated tool such as a dental instrument or insert therefore, including a vibrating tip for contacting tooth surfaces. The vibrating tip includes three distinct bends and a conduit or passageway for directing a fluid onto the dental or tip surfaces. The tool further includes a connecting body and a stack, where the connecting body has a distal portion with a shape that differs from that of a conventional tool.

### BACKGROUND

Many useful dental instruments employ substantial vibratory motion at a tool tip of the instrument for cleaning, scaling and like operations. The tool tips are designed to produce flexural and longitudinal vibrations with flexural motions of from about 0.02 to 0.2 mm. The tip is typically attached to an electro-mechanical part or section that can be induced to vibrate at high frequency. The instrument is driven by an electronic generator at relatively high frequencies, typically on the order of above 20 kHz, to obtain adequate motion and to minimize objectionable noise since the human hearing threshold is about 18 kHz. The energy generator and related electro-mechanical section may be any one of several types such as electro-dynamic, piezo electric, or magnetostrictive. Design of the tip and its related electro-mechanical components involves combining a number of parameters to produce mechanical resonances (harmonic vibrations) at the driving frequency to produce amplified mechanical motion, particularly at the distal tip end.

In many operations employing a vibrating tip tool, it is useful and often necessary to have a source of water or other fluid impinging upon the workpiece surfaces and/or tool surfaces in order to cool them or remove debris generated by the work. For example, in dental applications, when an ultrasonically vibrated tip contacts a tooth surface, as required for performing a cleaning operation, the moving tip against the tooth surface produces heat. The patient may experience a pain sensation which can be severe if the operator applies even mild pressure against the tooth while cleaning. Water or some other fluid is usually supplied to the tooth surface in order to remove the heat and minimize pain and possible heat damage to the tooth. In addition, a number of the electro-mechanical devices utilized in providing a vibrating tip generate heat internally during operation.

An example of an ultrasonic dental tool, wherein a handpiece containing a coil applies an electro-magnetic field to a magnetostrictive insert body to which a tool tip is fixed is described by Perdreaux in U.S. Pat. No. Re. 30,536 (CAVITRON®). In the Perdreaux design, heat caused by electrical and mechanical friction losses within the tool during vibration are dissipated by means of a cooling fluid that flows axially with respect to the tool insert, over the active magnetostrictive element or stack, emerging from an annular space between the insert and the handpiece and being directed toward the working end of the tool. The CAVITRON® arrangement is such that heat generated by the insert body warms the fluid which is then directed, as a convenient source of irrigating, flushing and/or cooling fluid, onto the active tip or workpiece area. The warm fluid minimizes reactions by patients who have sensitivity to cold temperatures.

In a number of dental operations, the vibrating tip is guided over and about tooth surfaces by the operator. It is advantageous if the tip is capable of penetrating between teeth and under or below the gingiva or gum line. Generally, the tip must be small in cross-section, ideally having a pointed tip with a tapered cross-section extending about 2.5 to 5 mm back from the distal tip end to allow adequate access between teeth and gingiva.

In addition, the tip is universally curved or shaped to conform to or be compatible with tooth surfaces. Useful tips will curve sufficiently to permit spanning the tooth frontal surface when entrance to abutting surfaces is needed or when access to subgingival zones about the oral cavity are required.

Experience in using such ultrasonically activated and irrigated tips has demonstrated that a combination of tip shape and fluid delivery system must be selected such that the tip is strong enough to support vibrating motion stresses at useable amplitudes. The forming process must be such that minute fractures or other weak points are not introduced into the tip material that might become focal points of breakage during use.

A number of vibrating tools, generally similar to the Perdreaux tool, as described above, are now in dental, medical, veterinary and other uses. Ultrasonic tool tips include internal fluid passageways bored along the longitudinal center axis of the tip component or body. In many such tips, a fluid discharge orifice is formed at the distal end of the tool, for directing fluid onto the workpiece. Such tip design is described, for example, by Balamuth et al in U.S. Pat. No. 3,924,335 for a piezo electric crystal vibrated dental tool. A difficulty in employing this tip design is that the tip must generally be of a relatively large diameter, on the order of greater than 1 mm, in order to have a sufficiently strong tip and a passageway that provides an adequate flow of fluid. Such a tip may be too blunt for many dental uses as it does not allow adequate tapering such that the tool thus cannot penetrate small inter-tooth spaces and can damage gums when used subgingivally.

All of the tips in the known art that discharge fluid from the distal end of the tip or close thereto are discharging from a tip at or before a point of high flexural motion, which motion often causes the fluid at this point to spray or form a mist adjacent to the tip and workpiece. Such spraying and misting may prevent fluid from reaching the workpiece area and, instead, dispense it over a relatively wide area, including onto the patient and operator.

Conventional dental ultrasonic scaling procedures often involve placement of an ultrasonic scaler tip into a small area such as a periodontal pocket. It is desired to make the working end of the tool such as the tip of the tool as thin as possible so that the user can observe the target area. (By tip it is understood to mean any portion of the working surface of tool itself, and may include single or monolithic structures or various connected parts that may even be removable, all of which are within the scope of the present disclosure.) However, reducing the outside diameter of the tool without reducing the diameter of a fluid passage therein, results in a thinner tip wall and an increased possibility of tool breakage during use. Ultrasonic tools such as dental scaling tools having a working end often are fabricated by starting with an unbent blank. In some cases, a back bend is put into one end of the blank (see for example, U.S. Pat. No. 6,494,714) and the fluid hole is added to the blank by some means such as drilling, electro-discharge machining (EDM) or other conventional technique.

For example, in conventional dental scaler tips, the fluid hole diameter is 0.014 inches and axially transverses the majority of the working end or tip end length of the tool. After the hole is placed into the bent blank, the blank is bent into its final shape. While this device provides for an excellent and effective dental tool, this dental tool has a diameter at the working end that is uncomfortable to the patient and inadequate amplitude control resulting in an unfocused spray of the fluid exiting the dental tool. The dental tool described herein overcomes the deficiencies of the prior art.

EP-A 0 323 598 discloses an apparatus for scaling and lavage on which the preamble of claim 1 is based.

### SUMMARY

The present invention provides an ultrasonic tool according to claim 1. Described herein is a transducer activated tool for contacting workpiece surfaces and directing a fluid adjacent or onto said surfaces, comprising an activated tip having distal surfaces shaped to contact the workpiece surfaces. The tip additionally includes distinct bends while the connecting body of the tool has a shape that differs from the connecting body of conventional tools. Such a tool conformation results in better contact with a tooth, better access to furcations, mesial and distal grooves and various tooth surfaces, increased comfort for a patient, and improved control of the vibrational amplitude of the tool. Also described herein are methods of making the transducer activated tool.

### BRIEF DESCRIPTION OF THE DRAWINGS

Figure 1 is a side elevational and sectional view of a conventional prior art, ultrasonically activated dental tool.
Figure 2 is a side elevational and sectional view of a conventional prior art, ultrasonically activated dental tool having coined working end.
Figure 3 is a side elevational and sectional view of an ultrasonically activated dental tool having a vibrating tip with distinct bends according to one embodiment of the present disclosure.
Figure 4 is a side elevational and sectional view of a vibrating tip of an ultrasonically activated dental tool with distinct bends according to one embodiment of the present disclosure.
Figure 5 is a side elevational and sectional view of a vibrating tip of an ultrasonically activated dental tool with distinct bends according to one embodiment of the present disclosure.
Figure 6 is side elevational and sectional view of a connecting body of an ultrasonically activated dental tool according to one embodiment of the present disclosure.
Figure 7 is side elevational and sectional view of a connecting body of an ultrasonically activated dental tool according to one embodiment of the present disclosure.
Figure 8 is a representation of multiple side elevational views of various embodiments of distal portions of a connecting body of an ultrasonically activated dental tool according to the present disclosure.

### DETAILED DESCRIPTION

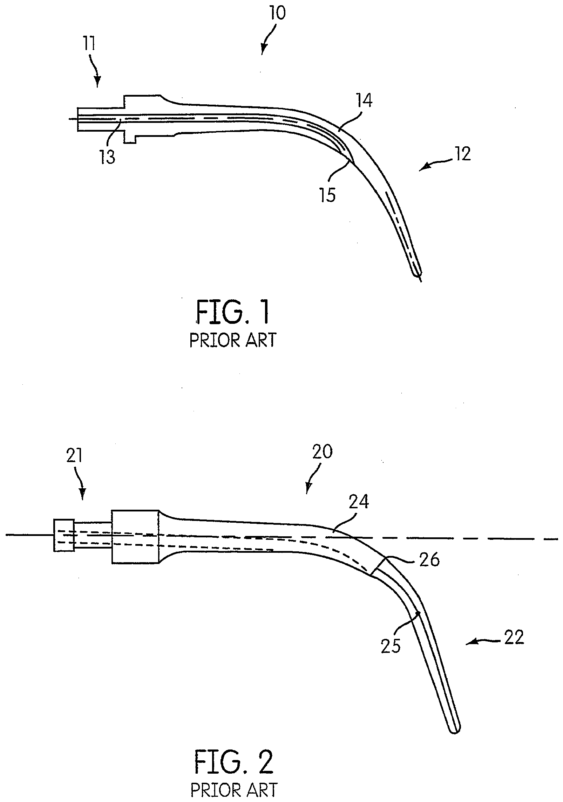

Figure 1 shows a conventional dental tool, designated by the number 10. Tool 10 is of the type, for illustrative purpose only, that is fitted with connecting body (not shown) a magnetostrictive stack (not shown) to be inserted into dental handpiece having a transducer (also not shown) all of which are conventional in the art. The prior art tool of Figure 1 has a connecting end generally designated by the number 11 and a working end generally designated by the number 12, which has a diameter of 0, 056 cm (0,022 inch). Tool 10 also has one curved bend area 14 and does not include any coining at the working end 12 of the dental tool.

Figure 2 shows a conventional dental tool, designated by the number 20. Tool 20 is of the type similar to conventional dental tool 10 in that it has a connecting end 21 and working end 22. In addition, the conventional dental 20 of Figure 2 includes a single bend area 24 and a coined working end 22 which begins before and includes a vibrational node 25.

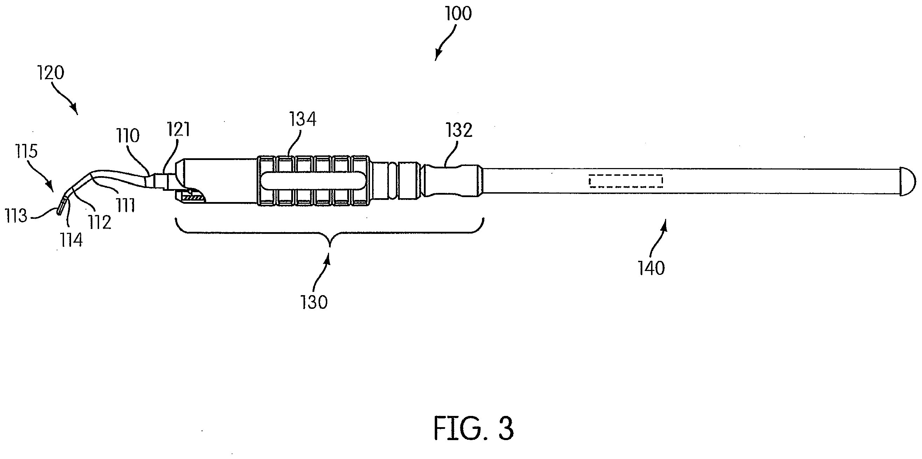

As shown in Figure 3, the ultrasonic tool 100 described herein includes a vibrating dental tool that is generally designated by the number 120 on the attached drawings. Again for illustrative purposes, vibrating tool 120 is shown as being an ultrasonic dental tool, although any tool with appropriate shapes or designs useful for its intended use is within the scope of the present disclosure. As with conventional tool 10 or 20, tool 120 includes a connecting end generally designated by the number 121 and a working end generally designated by the number 115. Tool 120 connects to a connecting body 130 via the connecting end 121, which in turn connects to a magnetostrictive element 140. As one of ordinary skill in the art understands, in embodiments, tool 120 as described herein may be formed separately from or integral to the connecting body alone, or both the connecting body and magnetostrictive element.

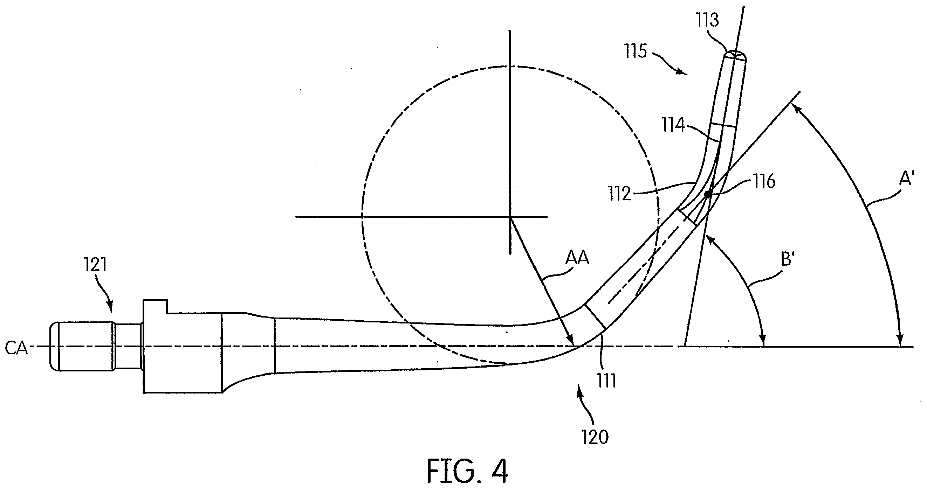

Dental tool 120 also has an internal fluid passageway 117 and distinct bends such as at areas 110, 111 and 112. One of ordinary skill understands that although a dental tool having three distinct bends is shown in Figures 3 and 5-7, a dental tool having two distinct bends as shown in Figure 4 and a dental tool having more than three distinct bends are within the scope of the present disclosure.

As shown in Figure 4, in embodiments where the dental tool 120 includes two bends 111 and 112, the angle A' between the bend 111 at about the center ofthe tool and the central axis CA is from about 40 to about 55 degrees, such as from about 42 to about 53 degrees or from about 45 to about 52 degrees. The radius AA ofthe bend 111 is from about 0.15 to about 0.25 inch, such as from 0.42 to 0.58 cm (0.165 to 0.23 inch) or from 0.46 to 0.51 cm (0.18 to 0.20 inch). In the embodiment of Figure 4, the angle B' between the bend 112 at about the working end 115 ofthe tool and the central axis CA is from about 75 to about 85 degrees, such as from about 77to about 83 degrees or from about 78 to about 82 degrees.

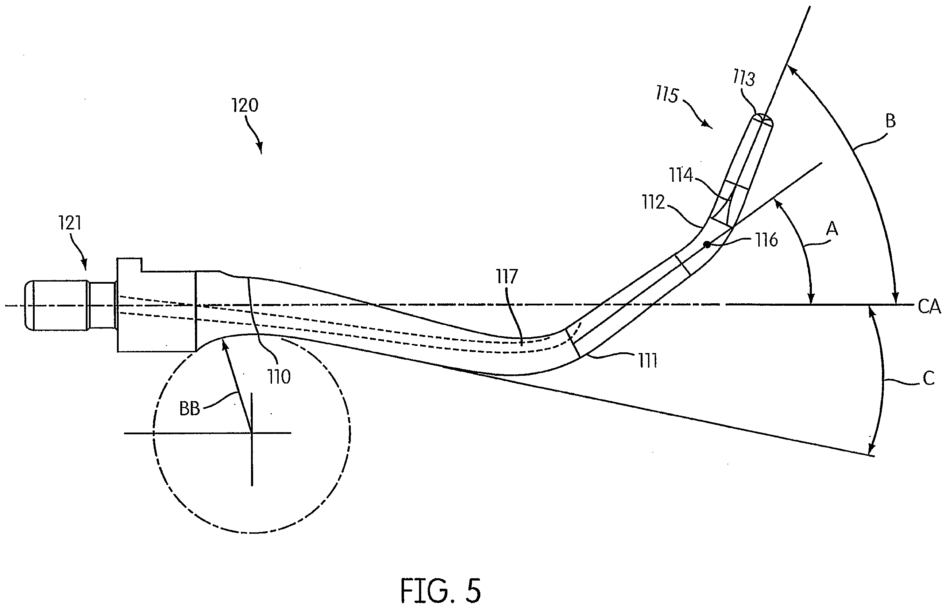

In embodiments, the coining 114 at the working end 115 ofthe dental tool 120 begins before and includes the vibrational node 116 of the dental tool. Such an embodiment is demonstrated in Figure 4. Due to the coining being located only at the working end 115 ofthe dental tool the patient feels increased comfort because while the sharp edges of the coining 114 are in contact with the surface ofthe tooth, these sharp edges are in minimal contact with the sensitive periodontal tissues of a patient as compared to conventional dental tools. This benefit is even more apparent in embodiments where the coining 114 at the working end 115 of the dental tool begins after the vibrational node 116 of the dental tool, as shown in Figure 5. In embodiments such as demonstrated in Figure 5, in addition to increased patientcomfort, the dental tool has increased strength because the coining 114 does notinclude or overlap the vibrational node 116. Because the coining does not overlap the vibrational node 116, that portion ofthe working end 115 that encompasses the vibrational node 116 has not been stressed or manipulated in creating the coining 114 feature and thus the metal at the vibrational node 116 has not lost any strength due to metal manipulation that occurs in the coining process of conventional dental tools, such as tool 20 ofFigure 2. Thus, a dental tool ofFigure 5 is less likely to break or fracture at a location ofthe vibrational node 116 as compared to the conventional tool 20 ofFigure 2.

The coining creates a polygonal shaped tip, that is, the tip 113 of the working end 115 has a polygonal shape, such as a hexagon, pentagon or square. The very tip 113 of the working end 115 may be dulled, that is, blunted and not sharp, for the increased comfort of a patient.

In further embodiments, the dental tool 120 may include three distinct bends 110, 111 and 112. In such embodiments, the angle C of the bend 110 at the end distal to the working end 115 of the tool from the central axis CA of the dental tool is from about 10 to about 18 degrees, such as from about 11 to about 16 degrees or from about 12 to about 14 degrees, the angle B between the bend 111 at about the center of the tool and the central axis CA is from about 31 to about 41 degrees, such as from about 33 to about 39 degrees or from about 34 to about 38 degrees or 36 degrees, and the angle A of the bend 112 at the working end or terminal end of the tool is from about 60 to about 75 degrees, such as from about 63 to about 70 degrees or from about 65 to about 69 degrees or 67 degrees. The radius BB of the bend 110 is from 0.23 to 0.55 cm (0.09 to 0.2165 inch), such as from 0.28 to 0.36 cm (0.11 to 0.14 inch) or from 0.30 to 0.33 cm (0.12 to 0.13 inch) or 0.32 cm (0.125 inch).

In addition to the dental tool according to the present disclosure having distinct bends as compared to a conventional dental tool, the dental tool according to the present disclosure also has a longer tip length. This measurement of length is the distance between the tip 113 of the working end 115 and the connecting end 121 of the vibrating tool prior to any machining of the vibrating tool. That is, this measurement is the length of the vibrating tool with any bends in the tool. For example, the conventional tool 10 or 20 of Figure 1 or 2, respectively, has a length of 1.85 cm .73 inch) as measured along the length of the dental tool. In comparison, the length of the dental tool according to the present disclosure as measured along the entire length of the dental tool 120 is at least 2.29 cm (0.9 inch), such as from 2.29 to 3.1 cm (0.9 to 1.2 inches) or from 2.31 to 2.41 cm (0.91 to 0.95 inch), such as 2.36 cm (0.93 inch). Further, the tip diameter of the dental tool 120 according to the present disclosure is smaller than the tip diameter of a conventional tool 10 or 20. The tip diameter at the working end 115 of the dental tool 120 of the present disclosure is from 0.038 to 0.076 cm (0.015 to 0.03 inch), such as from 0.043 to 0.071 cm (0.017 to 0.028 inches) or from 0.048 to 0.064 cm (0.019 to 0.025 inch) or 0.053 cm (0.021 inch).

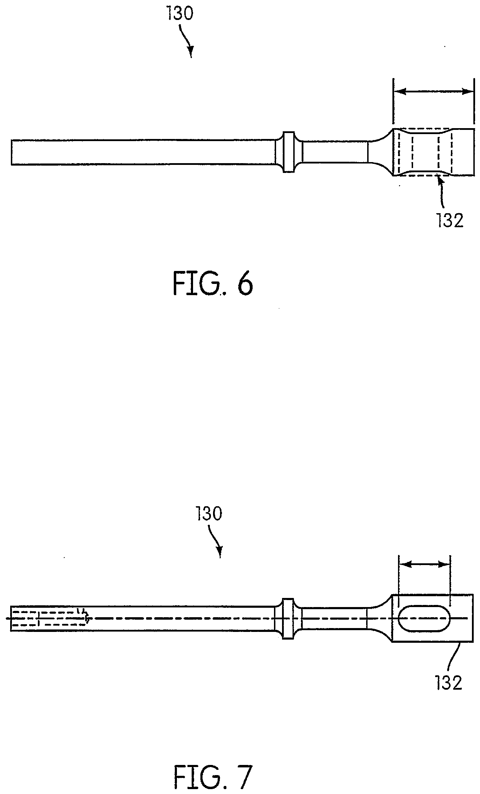

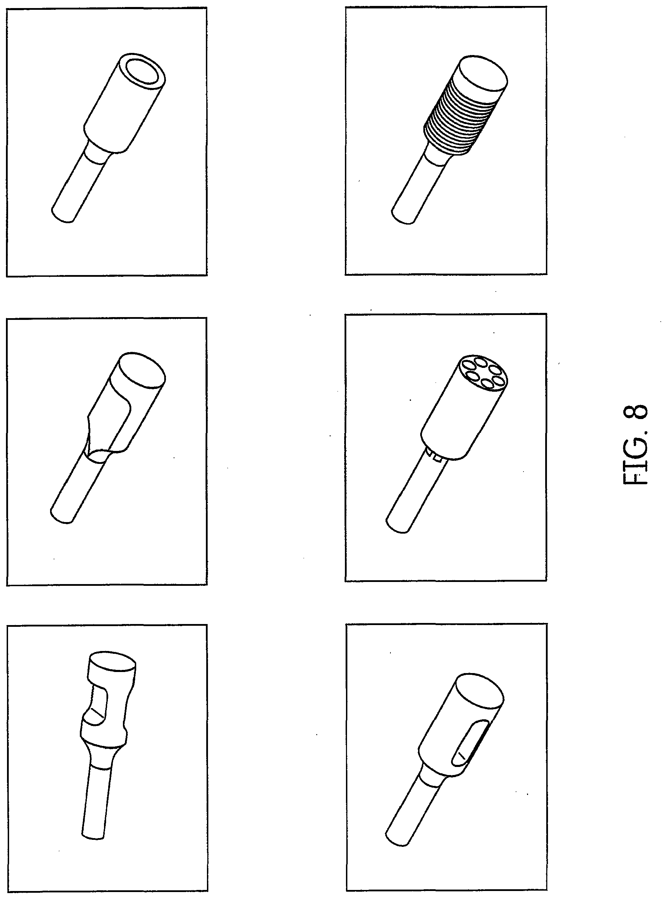

It will be understood that due to the thinner dental tool 120 as compared to a conventional dental tool 10 or 20 and the increased length of the dental tool 120, it is necessray to better control the vibrational amplitude of the dental tool, thereby ensuring proper flexural motion. In embodiments, this control of the vibrational amplitude is achived by decreasing the weight of the connecting body 130. In particular, the mass of the distal portion 132 of the connecting body 130 is decreased. This decrease in mass of the distal portion 132 of the connecting body 130 may be achieved by any acceptable manner, such as by thinning the cylindrical shape of this distal portion 132, shortening the length of this distal portion 132, changing the shape of the this distal portion 132, for example, by creating a cylinder having a circumferential concave shape as demonstrated by the distal portion 132 of Figure 6, or by creating a through slot in the distal portion 132 as shown in Figure 7. Examples of suitable manipulations of the distal portion 132 of the connecting body are demonstrated in Figure 8. Regardless of the manner in which the mass of the distal portion 132 of the connecting body 130 is decreased the amount of mass that is removed as compared to a conventional connecting body is from about 0.3 g to about 1.0 g, such as from about 0.65 g to about 0.9 g or from about 0.8 g to about 0.88 g.

As described above, in conventional methods of forming an ultrasonic tool, a bend is put into one end of a blank (see for example, U.S. Pat. No. 6,494,714) and the fluid passageway is added to the blank by some means such as drilling, electro-discharge machining (EDM) or other conventional technique. The blank is then bent in the opposite direction in order to form a working tool having the desired specifications and shape, that is, the passageway opening is found on the inside curve of the bend of the working tool.

In contrast to conventional tips, the working tool described herein is formed by first coining the tip of the blank. Only from 0.127 to 0.305 cm (0.05 to 0.12 inch) of the tip of the blank
is coined, such as from 0.152 to 0.254 cm (0.06 to 0.1 inch) or from 0.178 to 0.229 cm (0.07 to 0.09 inch), or such as 0.198 cm (0.078 inch). Once the blank has been coined, the terminal bend or working end bend 112 is formed. A pre-bend is then formed in order to created a fluid passageway and passageway opening. The passageway and passageway opening may be created by any known means such as drilling, EDM or any other conventional technique. Once the passageway has been created, the blank is bent in the opposite direction to form the mid-bend 111. Once this bend has been formed, the final or back-bend 110 is formed.

In alternative embodiments, the working tool described herein may be formed by a slightly different method. First, the tip of the blank is coined. Only from 0.127 to 0.305 cm (0.05 to 0.12 inch) of the tip of the blank is coined, such as from 0.152 to 0.254 cm (0.06 to 0.1 inch) or from 0.178 to 0.229 cm (0.07 to 0.09 inch), or such as 0.198 cm (0.078 inch). Once the blank has been coined, the passageway and passageway opening may be created by any known means such as drilling, EDM or any other conventional technique. Once the passageway has been created, the terminal bend or working end bend 112 is formed. Once the terminal bend has been created, the blank is bent in such that the mid-bend 111 is formed. Once this bend has been formed, the final or back-bend 110 is formed.

Because the passageway is created prior to the blank being bent, it is necessary that the passageway is created at an angle. For example, the passageway may be created as described above at an angle of about 1 degree to about 6 degrees, such as at an angle of 2 degrees to about 4 degrees, offset from the longitudinal axis of the blank. Such an angle is necessary to ensure that the passageway opening is located at the desired distance from the tip of the working tool.

In contrast to the first described method of forming the working tool described herein, the second described method requires only three bends, i.e., the terminal bend, the mid-bend and the back-bend. Utilizing such a second method circumvents the need for a pre-bend, thus not weakening the blank with extraneous bends. Although the second described method is desired, a suitable working tool may be formed using the first described method.

It should now be apparent that a device according to the present disclosure having an internal fluid passageway, such as a dental ultrasonic scaling tool, having the passageway and its discharge opening positioned away or substantially away from any bend area of the tool, allows for a fluid discharge orifice that is not or is substantially not adversely affected by deformations induced therein during the manufacturing steps of the tool that require bending. In addition, the areas of tool that do not or substantially do not contain the fluid passageway or its discharge hole, can be made thinner and with more or equal strength that such a device wherein those portions are contained or positioned within a bend area of the tool. The tool described has been characterized herein and exemplified on the drawings without attempting to show all configurations or embodiments thereof, it being understood that others are possible within the disclosed scope. The scope of the tool described herein shall therefore, only be limited by any attached claims.

## Claims

1. An ultrasonic tool (100), comprising:
(i) a vibrating tip (120) having a connecting end (121) and a working end (115), and having at least two bends (110, 111) and an internal fluid passageway (117),
(ii) a connecting body (130) having an irregular shape, and
(iii) a stack,
**characterized in that**
- the vibrating tip (120) is coined only from the tip (113) of the working end (115) to a distance of 1.27 mm (0.05 inch) to 3.05 mm (0.12 inch) as measured from the tip (113) of the working end (115), wherein the coining (114) creates a polygonal shape such that the tip (113) of the working end (115) has a polygonal shape.

2. The ultrasonic tool (100) according to claim 1, wherein the diameter of the tip (113) at the working end (115) is from 0.38 mm (0.015 inch) to 0.76 mm (0.03 inch).

3. The ultrasonic tool (100) according to claim 1 or 2, wherein an angle of a first bend (111) between a center of the vibrating tip (120) and a central axis (CA) is from 45 degree to 52 degrees, and an angle of a second bend (112) between a working end (115) of the vibrating tip (120) and the central axis is from 75 degrees to 85 degrees.

4. The ultrasonic tool (100) according to claim 1 or 2, wherein the vibrating tip (120) has three bends (110, 111, 112).

5. The ultrasonic tool (100) according to claim 4, wherein an angle of a first bend (110) between a distal working end (115) of the vibrating tip (120) and a central axis (CA) is from 10 degrees to 18 degrees, wherein an angle of a second bend (111) between a middle portion of the vibrating tip (120) and the central axis (CA) is from 31 degrees to 41 degrees, and an angle of a third bend (112) between a terminal end of the vibrating tip (120) and central axis (CA) is from 60 degrees to 75 degrees.

6. The ultrasonic tool (100) according to claim 1, wherein a length of the vibrating tip (120) as measured along the entire length is from 22.86 mm (0.9 inch) to 30.48 mm (1.2 inches).

7. A method of forming and ultrasonic tool (100) having a triple bend vibrating tip (120), the method comprising:
(i) coining a tip of a vibrating tip blank,
(ii) bending the blank to form a working end bend (112),
(iii) bending the blank in one direction to form a pre-bend and creating a fluid passageway (117), bending the tip (120) blank in an opposite direction of the one direction of the pre-bend to form a mid-bend (111), and
(iv) bending the tip blank in a back-bend to form the triple bend tip, wherein the vibrating tip (120) is coined only from the tip (113) of the working end (115) to a distance of 1.27 mm (0.05 inch) to 3.05 mm (0.12 inch) as measured from the tip (113) of the working end (115), wherein the coining (114) creates a polygonal shape such that the tip (113) of the working end (115) has a polygonal shape.

8. The method according to claim 7, wherein the coining (114) at the working end (115) of the dental tool (100) begins before and includes the vibrational node (116) of the dental tool (100).

9. The method according to claim 7, wherein the fluid passageway (117) is created by drilling a through hole and a passageway opening.

10. A method of forming and ultrasonic activated tool (100) having a triple bend tip (120), the method comprising:
(i) coining a tip of a tip blank,
(ii) creating a fluid passageway (117) in the tip blank prior to any bending of the tip blank,
(iii) bending the tip blank to form a terminal bend (112),
(iv) bending the tip (blank to form a mid-bend (111),
(v) bending the tip (120) blank in a back-bend to form the triple bend tip (120),
wherein the vibrating tip (120) is coined only from the tip (113) of the working end (115) to a distance of 1.27 mm (0.05 inch) to 3.05 mm (0.12 inch) as measured from the tip (113) of the working end (115), wherein the coining (114) creates a polygonal shape such that the tip (113) of the working end (115) has a polygonal shape.

11. The method according to claim 10, wherein the fluid passageway (117) is created by drilling a passageway (117) into the blank at an angle of from 1 degree to 6 degrees offset from a longitudinal axis of the blank.

12. The method according to claim 11, wherein the fluid passageway (117) is created by drilling a through hole and a passageway opening.

## Patentansprüche

1. Ein Ultraschallwerkzeug (100), umfassend:
(i) eine Vibrationsspitze (120), die ein Verbindungsende (121) und ein Arbeitsende (115) aufweist und mindestens zwei Biegungen (110, 111) und einen inneren Fluiddurchgang (117) aufweist,
(ii) einen Verbindungskörper (130), der eine unregelmäßige Form aufweist, und
(iii) eine Stange,
**dadurch gekennzeichnet, dass**
- die Vibrationsspitze (120) nur von der Spitze (113) des Arbeitsendes (115) bis zu einem Abstand von 1,27 mm (0,05 Inch) bis 3,05 mm (0,12 Inch), gemessen von der Spitze (113) des Arbeitsendes (115) aus, geprägt ist, wobei die Prägung (114) eine Vieleckform erzeugt, derart, dass die Spitze (113) des Arbeitsendes (115) eine Vieleckform aufweist.

2. Ultraschallwerkzeug (100) nach Anspruch 1, wobei der Durchmesser der Spitze (113) am Arbeitsende (115) 0,38 mm (0,015 Inch) bis 0,76 mm (0,03 Inch) beträgt.

3. Ultraschallwerkzeug (100) nach Anspruch 1 oder 2, wobei ein Winkel einer ersten Biegung (111) zwischen einer Mitte der Vibrationsspitze (120) und einer Mittelachse (CA) 45 Grad bis 52 Grad beträgt und ein Winkel einer zweiten Biegung (112) zwischen einem Arbeitsende (115) der Vibrationsspitze (120) und der Mittelachse 75 Grad bis 85 Grad beträgt.

4. Ultraschallwerkzeug (100) nach Anspruch 1 oder 2, wobei die Vibrationsspitze (120) drei Biegungen (110, 111, 112) aufweist.

5. Ultraschallwerkzeug (100) nach Anspruch 4, wobei ein Winkel einer ersten Biegung (110) zwischen einem distalen Arbeitsende (115) der Vibrationsspitze (120) und einer Mittelachse (CA) 10 Grad bis 18 Grad beträgt, wobei ein Winkel einer zweiten Biegung (111) zwischen einem Mittelabschnitt der Vibrationsspitze (120) und der Mittelachse (CA) 31 Grad bis 41 Grad beträgt und ein Winkel einer dritten Biegung (112) zwischen einem endständigen Ende der Vibrationsspitze (120) und der Mittelachse (CA) 60 Grad bis 75 Grad beträgt.

6. Ultraschallwerkzeug (100) nach Anspruch 1, wobei eine Länge der Vibrationsspitze (120), wie gemessen längs der gesamten Länge, 22,86 mm (0,9 Inch) bis 30,48 mm (1,2 Inch) beträgt.

7. Verfahren zum Bilden eines Ultraschallwerkzeugs (100), das eine Dreifachbiegungs-Vibrationsspitze (120) aufweist, wobei das Verfahren umfasst.
(i) Prägen einer Spitze eines Vibrationsspitzenrohlings,
(ii) Biegen des Rohlings, um eine Arbeitsendenbiegung (112) zu bilden,
(iii) Biegen des Rohlings in eine Richtung, um eine Vorbiegung zu bilden und einen Fluiddurchgang (117) zu erzeugen, Biegen des Rohlings der Spitze (120) in eine entgegengesetzte Richtung der Richtung der Vorbiegung, um eine Mittelbiegung (111) zu bilden, und
(iv) Biegen des Spitzenrohlings in eine Rückbiegung, um die Dreifachbiegungsspitze zu bilden,
wobei die Vibrationsspitze (120) nur von der Spitze (113) des Arbeitsendes (115) bis zu einem Abstand von 1,27 mm (0,05 Inch) bis 3,05 mm (0,12 Inch), gemessen von der Spitze (113) des Arbeitsendes (115) aus, geprägt wird, wobei die Prägung (114) eine Vieleckform erzeugt, derart, dass die Spitze (113) des Arbeitsendes (115) eine Vieleckform aufweist.

8. Verfahren nach Anspruch 7, wobei die Prägung (114) am Arbeitsende (115) des zahnmedizinischen Werkzeugs (100) vor dem Vibrationsknoten (116) des zahnmedizinischen Werkzeugs (100) beginnt und diesen beinhaltet.

9. Verfahren nach Anspruch 7, wobei der Fluiddurchgang (117) durch Bohren eines Durchgangslochs und einer Durchgangsöffnung erzeugt wird.

10. Verfahren zum Bilden eines durch Ultraschall aktivierten Werkzeugs (100), das eine Dreifachbiegungsspitze (120) aufweist, wobei das Verfahren umfasst:
(i) Prägen einer Spitze eines Spitzenrohlings,
(ii) Erzeugen eines Fluiddurchganges (117) in dem Spitzenrohling vor jeglichem Biegen des Spitzenrohlings,
(iii) Biegen des Spitzenrohlings, um eine endständige Biegung (112) zu bilden,
(iv) Biegen des Spitzenrohlings, um eine Mittelbiegung (111) zu bilden,
(v) Biegen des Rohlings der Spitze (120) in eine Rückbiegung, um die Dreifachbiegungsspitze (120) zu bilden,
wobei die Vibrationsspitze (120) nur von der Spitze (113) des Arbeitsendes (115) bis zu einem Abstand von 1,27 mm (0,05 Inch) bis 3,05 mm (0,12 Inch), gemessen von der Spitze (113) des Arbeitsendes (115) aus, geprägt wird, wobei die Prägung (114) eine Vieleckform erzeugt, derart, dass die Spitze (113) des Arbeitsendes (115) eine Vieleckform aufweist.

11. Verfahren nach Anspruch 10, wobei der Fluiddurchgang (117) durch Bohren eines Durchganges (117) in den Rohling unter einem Winkel von 1 Grad bis 6 Grad versetzt von einer Längsachse des Rohlings erzeugt wird.

12. Verfahren nach Anspruch 11, wobei der Fluiddurchgang (117) durch Bohren eines Durchgangslochs und einer Öffnung des Durchganges erzeugt wird.

## Revendications

1. Outil ultrasonique (100), comprenant :
(i) une pointe vibrante (120) ayant une extrémité de liaison (121) et une extrémité fonctionnelle (115) et ayant au moins deux courbures (110, 111) et un passage interne pour fluide (117),
(ii) un corps de liaison (130) ayant une forme irrégulière, et
(iii) un empilement,
**caractérisé en ce que**
- la pointe vibrante (120) est estampée uniquement de la pointe (113) de l'extrémité fonctionnelle (115) à une distance de 1,27 mm (0,05 pouce) à 3,05 mm (0,12 pouce) tel que mesuré à partir de la pointe (113) de l'extrémité fonctionnelle (115), dans lequel l'estampage (114) crée une forme polygonale de sorte que la pointe (113) de l'extrémité fonctionnelle (115) présente une forme polygonale.

2. Outil ultrasonique (100) selon la revendication 1, dans lequel le diamètre de la pointe (113) au niveau de l'extrémité fonctionnelle (115) mesure de 0,38 mm (0,015 pouce) à 0,76 mm (0,03 pouce).

3. Outil ultrasonique (100) selon la revendication 1 ou 2, dans lequel un angle d'une première courbure (111) entre un centre de la pointe vibrante (120) et un axe central (CA) mesure de 45 degrés à 52 degrés et un angle d'une deuxième courbure (112) entre une extrémité fonctionnelle (115) de la pointe vibrante (120) et l'axe central mesure de 75 degrés à 85 degrés.

4. Outil ultrasonique (100) selon la revendication 1 ou 2, dans lequel la pointe vibrante (120) a trois courbures (110, 111, 112).

5. Outil ultrasonique (100) selon la revendication 4, dans lequel un angle d'une première courbure (110) entre une extrémité distale fonctionnelle (115) de la pointe vibrante (120) et un axe central (CA) mesure de 10 degrés à 18 degrés, dans lequel un angle d'une deuxième courbure (111) entre une partie médiane de la pointe vibrante (120) et l'axe central (CA) mesure de 31 degrés à 41 degrés et un angle d'une troisième courbure (112) entre une extrémité terminale de la pointe vibrante (120) et l'axe central (CA) mesure de 60 degrés à 75 degrés.

6. Outil ultrasonique (100) selon la revendication 1, dans lequel une longueur de la pointe vibrante (120) telle que mesurée le long de la longueur totale mesure de 22,86 mm (0,9 pouce) à 30,48 mm (1,2 pouces).

7. Procédé pour la formation d'un outil ultrasonique (100) ayant une pointe vibrante à triples courbures (120), le procédé comprenant :
(i) l'estampage d'une pointe d'un espace de pointe vibrante,
(ii) la flexion de l'espace pour former une courbure de l'extrémité fonctionnelle (112),
(iii) la flexion de l'espace dans une direction pour former une pré-courbure et la création d'un passage pour fluide (117), la flexion de l'espace de la pointe (120) dans une direction opposée à la direction de la pré-courbure pour former une courbure intermédiaire (111), et
(iv) la flexion de l'espace de la pointe dans une courbure arrière pour former la pointe à triples courbures, dans lequel la pointe vibrante (120) est estampée uniquement de la pointe (113) de l'extrémité fonctionnelle (115) à une distance de 1,27 mm (0,05 pouce) à 3,05 mm (0,12 pouce) tel que mesuré à partir de la pointe (113) de l'extrémité fonctionnelle (115), dans lequel l'estampage (114) crée une forme polygonale de sorte que la pointe (113) de l'extrémité fonctionnelle (115) présente une forme polygonale.

8. Procédé selon la revendication 7, dans lequel l'estampage (114) au niveau de l'extrémité fonctionnelle (115) de l'outil dentaire (100) débute avant et inclut le noeud vibratoire (116) de l'outil dentaire (100).

9. Procédé selon la revendication 7, dans lequel le passage pour fluide (117) est créé en perçant un trou traversant et une ouverture de passage.

10. Procédé pour la formation d'un outil ultrasonique activé (100) ayant une pointe à triples courbures (120), le procédé comprenant :
(i) l'estampage d'une pointe d'un espace de la pointe,
(ii) la création d'un passage pour fluide (117) dans l'espace de la pointe avant toute flexion de l'espace de la pointe,
(iii) la flexion de l'espace de la pointe pour former une courbure terminale (112),
(iv) la flexion de l'espace de la pointe pour former une courbure intermédiaire (111),
(v) la flexion de l'espace de la pointe (120) dans une courbure arrière pour former la pointe à triples courbures (120),
dans lequel la pointe vibrante (120) est estampée uniquement de la pointe (113) de l'extrémité fonctionnelle (115) à une distance de 1,27 mm (0,05 pouce) à 3,05 mm (0,12 pouce) tel que mesuré à partir de la pointe (113) de l'extrémité fonctionnelle (115), dans lequel l'estampage (114) crée une forme polygonale de sorte que la pointe (113) de l'extrémité fonctionnelle (115) présente une forme polygonale.

11. Procédé selon la revendication 10, dans lequel le passage pour fluide (117) est créé en perçant un passage (117) dans l'espace à un angle mesurant de 1 degré à 6 degrés décalé d'un axe longitudinal de l'espace.

12. Procédé selon la revendication 11, dans lequel le passage pour fluide (117) est créé en perçant un trou traversant et une ouverture de passage.
